# EUROPÄISCHE PATENTSCHRIFT

(11) **EP 2 558 303 B1**
(45) Veröffentlichungstag und Bekanntmachung des Hinweises auf die Patenterteilung: **02.07.2014**
(21) Anmeldenummer: 11711368.8
(22) Anmeldetag: 31.03.2011
(51) Int. Cl.: B42D 15/00

(54) **SELBSTVERIFIZIERENDES OPTISCHES SICHERHEITSELEMENT**
SELF-VERIFYING OPTICAL SECURITY ELEMENT
ÉLÉMENT DE SÉCURITÉ OPTIQUE AUTO-VÉRIFIANT

(30) Priorität: 14.04.2010 DE 102010015302
(43) Veröffentlichungstag der Anmeldung: 20.02.2013
(73) Patentinhaber: Bundesdruckerei GmbH, 10969 Berlin (DE)
(72) Erfinder: DRESSEL, Olaf, 14641 Wustermark (DE); LEOPOLD, André, 10119 Berlin (DE)
(74) Vertreter: Patentanwälte Bressel und Partner mbB
(86) Internationale Anmeldenummer: PCT/EP2011/055041
(87) Internationale Veröffentlichungsnummer: WO 2011/128214

(56) Entgegenhaltungen:
- DE-A1-102007 048 086
- US-A- 4 501 439

## Beschreibung

Die Erfindung betrifft ein optisches Sicherheitselement für Wert- und/oder Sicherheitsdokumente, ein Wert- und/oder Sicherheitsdokument sowie ein Verfahren zur Herstellung eines solchen optischen Sicherheitselements.

Wert- und/oder Sicherheitsdokumente sind solche physikalischen Entitäten, die gegen ein unautorisiertes Herstellen und/oder Verfälschen durch Sicherheitsmerkmale geschützt sind.

Sicherheitsmerkmale sind solche Merkmale, die ein Verfälschen und/oder Duplizieren gegenüber einem einfachen Kopieren zumindest erschweren. Physikalische Entitäten, die ein Sicherheitsmerkmal umfassen oder ausbilden, werden als Sicherheitselemente bezeichnet. Ein Sicherheitsdokument kann mehrere Sicherheitsmerkmale und/oder Sicherheitselemente umfassen. Im Sinne der hier festgelegten Definition stellt ein Sicherheitsdokument auch immer ein Sicherheitselement dar.

Sicherheitselemente und/oder Sicherheitsmerkmale sind so ausgebildet, dass diese hinsichtlich ihrer Echtheit und/oder ihres Vorhandenseins verifiziert werden können. Ein optisches Sicherheitsmerkmal oder Sicherheitselement kann optisch verifiziert werden. Einfache Sicherheitsmerkmale, die optisch verifiziert werden können, sind beispielsweise Wasserzeichen in Papier, ein Guillochendruck bei Banknoten oder Wertpapieren, aber auch Hologramme, die in modernen Wert- und/oder Sicherheitsdokumenten als Sicherheitselemente eingesetzt werden.

Im Stand der Technik sind zum einen optische Sicherheitsmerkmale bekannt, die bei entsprechender Anregung, beispielsweise durch elektromagnetische Strahlung, insbesondere im sichtbaren, ultravioletten oder infraroten Wellenlängenbereich, einen optischen Effekt hervorrufen, der für ein menschliches Auge ohne Zuhilfenahme weiterer Hilfsmittel erfassbar ist.

Es sind jedoch im Stand der Technik auch optische Sicherheitsmerkmale bekannt, die bei einer Anregung einen optischen Effekt hervorrufen, der durch ein menschliches Auge nicht oder nicht vollständig erfassbar ist. Hierzu zählen beispielsweise Sicherheitselemente, die bei einer Anregung mit einer gerichteten Strahlung diese beeinflussen, so dass auf einem Schirm eine Projektion erzeugbar ist.

Ein entsprechendes Sicherheitselement ist beispielsweise in deutschen Personaldokumenten verwirklicht, bei dem ein senkrecht auf das Sicherheitselement auftreffender gerichteter Lichtstrahl reflektierend in der Weise gebeugt wird, dass von dem Auftreffpunkt eines gerichteten Lichtstrahls mehrere unter unterschiedlichen Raumwinkeln gebeugte Strahlen ausgehen. Um diese wahrnehmen zu können, ist es erforderlich, vor dem Dokument einen Projektionsschirm anzuordnen, um die unterschiedlichen Durchstoßpunkte der unterschiedlichen gebeugten gerichteten Strahlen durch die Projektionsebene sichtbar zu machen und anhand des Projektionsmusters eine Verifikation des Sicherheitselements über einen Vergleich mit einem erwarteten Muster der Projektionspunkte zu vergleichen.

Eine Verifikation eines solchen Sicherheitsmerkmals bzw. Sicherheitselements ist zum einen nur mit technischen Hilfsmitteln möglich, die über ein Bereitstellen einer gerichteten Lichtquelle hinausgehen. Ferner muss das Sicherheitsdokument in einem definierten Abstand und einer definierten Orientierung bezüglich des Projektionsschirms angeordnet werden, um eine zuverlässige Verifikation zu ermöglichen. Sind Abstand und/oder Orientierung nicht korrekt gewählt, so entsteht ein verzerrtes und/oder hinsichtlich seiner Größe von dem erwarteten Projektionsbild abweichendes Projektionsbild auf dem Schirm. Eine schnelle und einfache Verifikation durch menschliches Kontrollpersonal ist gar nicht möglich.

Aus der US 4,501,439 ist ein Sicherheitsgegenstand nach dem Oberbegriff des Anspruchs 1 bekannt, der ein Substrat umfasst, welches zwei Hauptoberflächen, eine thermoplastische Schicht mit einem vorbestimmten Brechungsindex, die geeignet ist, um darauf ein maschinenlesbares Authentifizierungsmerkmal in Form einer optischen Mikrostruktur einzuprägen, und eine transparente Schicht umfasst, die einen ebenfalls vorbestimmten Brechungsindex zum Abdecken und Schützen der Mikrostruktur aufweist, wobei die Brechungsindizes der thermoplastischen Schicht und der transparenten Schicht verschieden sind. Die Mikrostruktur erzeugt einen Beugungseffekt. Das Substrat, auf den die thermoplastische Schicht und die Abdeckschicht aufgebracht sind, ist diffus reflektierend ausgebildet, sodass die gerichtete Beugung der Mikrostruktur ohne Hilfsmittel aufgrund der diffusen Reflexion an dem Substrat nicht erkennbar ist. Mittels maschineller Hilfe lässt sich die gerichtete Beugung der Mikrostruktur jedoch erfassen.

Der Erfindung liegt somit die technische Aufgabe zugrunde, ein Sicherheitselement mit einem optischen Sicherheitsmerkmal, welches zur Verifikation eine Projektion erfordert, zu schaffen, welches einfacher zu verifizieren ist und vorteilhafterweise auch in dünne, kartenförmig oder scheinartig ausgebildete Wert- und/oder Sicherheitsdokumente integrierbar ist. Ferner ist es Aufgabe, ein Herstellungsverfahren für solch ein Sicherheitselement zu schaffen.

Die Aufgabe wird erfindungsgemäß durch ein Sicherheitselement mit den Merkmalen des Patentanspruchs 1, ein Sicherheitsdokument mit den Merkmalen nach Anspruch 9 sowie ein Verfahren zum Erzeugen eines Sicherheitselements mit den Merkmalen des Patentanspruchs 10 gelöst. Vorteilhafte Ausführungsformen der Erfindung ergeben sich aus den Unteransprüchen.

Der Erfindung liegt der Gedanke zugrunde, ein so genanntes optisch aktives Element, welches entlang einer ausgezeichneten optischen Achse, die bezüglich des optischen aktiven Elements definiert ist, einfallende gerichtete Strahlung unter einem oder mehreren Winkeln gegenüber der optischen Achse reflektierend gebeugt und/oder reflektiert angrenzend an eine Seite eines Abstandselements anzuordnen. Das Abstandselement ist für die zur Verifikation verwendete gerichtete Strahlung transparent. Die Anordnung erfolgt so, dass das optisch aktive Element durch das Abstandselement entlang der optischen Achse angestrahlt werden kann. An einer gegenüberliegenden Seite des Abstandselements wird zusätzlich ein Projektionselement angeordnet oder ausgebildet, so dass die bei Einstrahlung der gerichteten Strahlung entlang der optischen Achse durch das Abstandselement definiert reflektierend gebeugte oder definiert reflektierte Strahlung auf dem Projektionselement eine erfassbare Projektion erzeugt.

### Definitionen

Als Sicherheitsdokumente werden körperliche Entitäten aufgefasst, die mindestens ein Sicherheitsmerkmal aufweisen, welches eine unautorisierte Nachbildung und/oder Verfälschung desselben erschwert oder unmöglich macht. Sicherheitsdokumente, die einen Wert verkörpern, werden auch als Wertdokumente bezeichnet. Sicherheitsdokumente umfassen u.a. Personalausweise, Reisepässe, Führerscheine, Identitätskarten, Bankkarten, Banknoten, Postwertzeichen, Aktien, Wertpapiere, aber auch Sicherungsetiketten, Sicherheitsverpackungen und Ähnliches.

Als optisch aktives Element wird eine bauliche Einheit bezeichnet, die eine auftreffende gerichtete und räumlich begrenzte Strahlung abweichend von optischen Effekten, wie sie an planen Grenzflächen zwischen Medien unterschiedlichen Brechungsindexes auftreten, beeinflusst.

Unter einer optischen Achse wird im Zusammenhang dieser Erfindung eine ungerichtete Strecke im Raum verstanden. Eine bezüglich einer Entität definierte optische Achse ist bezüglich eines Auftreffpunkts in einem mit dem Objekt verknüpften Koordinatensystem definiert. Die optische Achse ist somit in einem mit dem Objekt gekoppelten Koordinatensystem, bezüglich dessen die optische Achse definiert ist, ortsfest.

Eine gerichtete Strahlung ist eine quer zur Ausbreitungsrichtung räumlich begrenzte Strahlung, deren Einzelstrahlen im Wesentlichen zueinander parallel orientiert sind und nur eine begrenzte Winkeldivergenz gegenüber der Ausbreitungsrichtung aufweisen. Kollimierte Strahlung oder aus einem Laser austretende Strahlung sind Beispiele für eine gerichtete Strahlung.

Unter einer Formulierung "an einem optischen Element beugend reflektiert oder reflektiert" werden all jene optischen Prozesse verstanden, bei denen gerichtete Strahlung, die auf eine Ebene trifft, so beeinflusst wird, dass dies in die Hemisphäre "zurückgeworfen" / "zurückgelenkt" wird, aus der die gerichtete Strahlung auf die Ebene auftrifft. Anders ausgedrückt wird gerichtete Strahlung, die aus einem Raumwinkelbereich, welcher 2π um eine Oberflächennormale um den Auftreffpunkt der Strahlung definiert ist, so beeinflusst, dass diese von dem optischen Element in genau denselben 2π-Raumwinkelbereich vor dem optisch aktiven Element "zurückgelenkt" wird. Die Winkelbereiche beziehen sich hier auf Raumwinkel, so dass eine Hemisphäre einer Kugel einen Raumwinkelbereich von 2π aufspannt.

### Bevorzugte Ausführungsformen

Insbesondere wird ein Sicherheitselement für ein Sicherheitsdokument geschaffen, welches umfasst: ein optisch aktives Element, bezüglich dessen eine optische Achse definiert ist und welches ausgebildet ist, gerichtete Strahlung, die entlang der optischen Achse auf das optisch aktive Element auftrifft, definiert unter einem oder mehreren Winkeln, die vorzugsweise größer als ein Mindestwinkel sind, gegenüber der optischen Achse zu reflektieren oder reflektierend zu beugen, ein Projektionselement und ein Abstandselement, das für die gerichtete und reflektierte oder reflektierend gebeugte Strahlung transparent ist, wobei das Projektionselement und das optisch aktive Element auf gegenüberliegenden Seiten des Abstandselements so angeordnet oder ausgebildet sind und über das Abstandselement miteinander strahlungsleitend verbunden sind, dass die bei Einstrahlung der gerichteten Strahlung durch das Abstandselement entlang der optischen Achse definiert reflektierte und/oder reflektierend gebeugte Strahlung eine erfassbare Projektion auf dem Projektionselement erzeugt. Ein erfindungsgemäßes Sicherheitsdokument wird geschaffen, indem ein solches Sicherheitselement in das Sicherheitsdokument integriert wird.

Ein Verfahren zum Erzeugen eines Sicherheitselements, welches selbst verifizierend ist, umfasst die Schritte: Bereitstellen oder Ausbilden eines optisch aktiven Elements, bezüglich dessen eine ausgezeichnete optische Achse definiert ist, wobei das optisch aktive Element entlang der optischen Achse auf das optisch aktive Element auftreffende gerichtete Strahlung definiert in eine oder mehrere Richtungen reflektierend beugt oder reflektiert; Bereitstellen oder Ausbilden eines Abstandselements, welches für die gerichtete Strahlung und die reflektierend gebeugte oder reflektierte Strahlung transparent ist, wobei das Abstandselement angeordnet oder ausgebildet wird, dass eine Seite des Abstandselements an das optisch aktive Element angrenzt und in dem fertiggestellten Sicherheitselement die gerichtete Strahlung entlang der optischen Achse durch das Abstandselement auf das optisch aktive Element auftreffen kann, wobei ein Projektionselement ausgebildet oder angeordnet wird, so dass das Projektionselement auf einer der einen Seite gegenüberliegenden weiteren Seite des Abstandselements angeordnet wird oder ist und mittels des Abstandselements strahlungsleitend mit dem optisch aktiven Element verbunden wird oder ist, so dass die bei Einstrahlung der gerichteten Strahlung durch das Abstandselement entlang der optischen Achse definiert reflektierte und/oder reflektierend gebeugte Strahlung eine erfassbare Projektion auf dem Projektionselement erzeugt.

Da die gerichtete Strahlung von derselben Seite in das Sicherheitsdokument eingestrahlt wird, von der aus auch die entstehende Projektion auf dem Projektionselement beobachtet wird, ist am Eintrittspunkt der gerichteten Strahlung in das Sicherheitsdokument entstehende gestreute und/oder reflektierte Strahlung nachteilig für eine Beobachtung der Projektion zur Verifikation des Sicherheitselements. Beabstandet zu dem optischen aktiven Element ist daher ein Kompensationselement angeordnet oder ausgebildet, welches für die gerichtete Strahlung zumindest an einer von dem optischen Element abgewandten Eintrittsseite für die Strahlung der Wellenlänge der gerichteten Strahlung absorbierend ist, wobei das Kompensationselement die optische Achse in einer Ebene quer zur optischen Achse umschließt, jedoch um und entlang der optischen Achse eine Durchtrittsöffnung für die gerichtete Strahlung aufweist. Vorzugsweise ist das Kompensationselement ringförmig ausgebildet. Die Ebene quer zur optischen Achse ist vorzugsweise parallel zu einer Oberfläche des Abstandselements und/oder parallel zu einer Ebene ausgerichtet, in der das Projektionselement sich flächig erstreckt.

Vorteilhaft ist an der Erfindung, dass zur Verifikation des Sicherheitselements lediglich gerichtete Strahlung notwendig ist, die entlang der optischen Achse, die bezüglich des optisch aktiven Elements definiert ist, eingestrahlt wird. Die hierbei entstehende definiert reflektierend gebeugte oder reflektierte Strahlung wird in die Hemisphäre, aus der gerichtete Strahlung auf das optisch aktive Element eingestrahlt wird, gezielt zurückgeworfen, so dass diese auf einem Schirm, der beabstandet zu dem optisch aktiven Element getrennt durch das Abstandselement angeordnet ist, für einen Betrachter erfassbar gemacht wird. Vorteilhaft ist, dass das Projektionselement in das Sicherheitselement körperlich integriert ist und somit bezüglich des optisch aktiven Elements definiert positioniert ist.

Unter definiert gebeugt oder reflektiert wird hier ein optischer Prozess verstanden, bei dem gerichtete Strahlung unter vorher festgelegten Raumwinkeln bezüglich der Einstrahlachse durch das optisch aktive Element abgelenkt werden. Hierbei ist das bei der Ablenkung entstehende Strahlungsfeld durch das optisch aktive Element vorfestgelegt.

Unter einer definierten reflektierenden Beugung bzw. unter einer definierten Reflexion jeweils unter mehreren Winkeln wird ein optischer Prozess verstanden, der ein Strahlungsfeld erzeugt, welches sich von dem unterscheidet, welches an einer ebenen Grenzfläche zwischen zwei Medien unterschiedlichen Brechungsindexes stattfindet. Somit unterscheidet sich die definierte reflektierende Beugung bzw. definierte Reflexion unter mehreren Winkeln von einer Reflexion eines gerichteten Lichtstrahls gemäß der geometrischen Optik. Darüber hinaus wird für eine definierte reflektierende Beugung bzw. definierte Reflexion gefordert, dass die entlang der optischen Achse auf das aktive Element auftreffende gerichtete Strahlung so durch das optisch aktive Element abgelenkt wird, dass die erzeugte Projektion sich von der eines diffus gestreuten Strahls unterscheidet.

Da Sicherheitsdokumente heutzutage häufig aus transparenten Kunststoffschichten hergestellt werden, die miteinander zu einem Dokumentenkörper zusammengefügt werden, insbesondere über einen Laminationsprozess, ist bei einer bevorzugten Ausführungsform vorgesehen, dass das Abstandselement aus einer oder mehreren für eine Wellenlänge der gerichteten Strahlung transparenten Schichten oder Folien gebildet ist oder wird. Bei der Folie handelt es sich vorzugsweise um eine Kunststofffolie, welche vorzugsweise aus Polycarbonat (PC), insbesondere Bisphenol-A-Polycarbonat, Polyethylenterephthalat (PET), deren Derivaten wie Glykol-modifiziertem PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplatischen Elastomeren (TPE), insbesondere thermoplastischem Polyurethan (TPU), AcrylnitrilButadien-Styrol (ABS), Teslin^{®} sowie deren Derivaten besteht. Ferner kann es sich um eine koextrudierte Folie und andere Hybridmaterialien handeln, welche unter anderen die vorgenannten Materialien enthalten.

Ebenfalls ist nachteilig, wenn die Strahlung auf streuende Schichten unterhalb des optisch aktiven Elements trifft. Dieses gilt insbesondere dann, wenn das optisch aktive Element die eintreffende Strahlung nicht zu 100% umlenkt. Die durch das optisch aktive Element durchtretende Strahlung kann an den unterhalb liegenden streuenden Schichten zurückgestreut werden und so die Beobachtung erschweren. Aus diesem Grund kann in einer bevorzugten Ausführungsform unter dem optisch aktiven Element ein Absorptionselement angeordnet sein. Das Absorptionselement absorbiert die durch das optisch aktive Element durchtretende Strahlung und verhindert so eine Rückstreuung der Strahlung durch die unterhalb angeordneten streuenden Schichten. Bei einer Ausführungsform ist ein Absorptionselement auf einer von dem Absorptionselement abgewandten Seite des optisch aktiven Elements angrenzend oder beabstandet von dieser abgewandten Seite angeordnet, um durch das optisch aktive Element transmittierte Strahlung zu absorbieren.

Da das Verifikationspersonal die gerichtete Strahlung entlang der optischen Achse einstrahlen muss, wird das optisch aktive Element vorzugsweise so ausgebildet, dass eine Einstrahlung senkrecht zu der Seitenfläche erfolgt, die der Seite zugewandt ist, durch welche die optische Anregung erfolgt.

Das optische aktive Element kann unterschiedlich ausgestaltet sein. Besonders bevorzugt werden optisch aktive Elemente, die als Volumenhologramm ausgebildet sind. Diese weisen zum einen eine hohe Wellenlängen- als auch Winkelselektivität hinsichtlich der gerichteten Strahlung auf, mit der eine Rekonstruktion und hiermit eine reflektierende Beugung ausgelöst werden kann. Besonders bevorzugt werden somit Volumenprojektionshologramme als optisch aktive Elemente verwendet.

Um die erzeugte Projektion einfacher verifizieren zu können, ist bei einer Ausführungsform vorgesehen, dass auf dem Projektionselement mindestens eine Referenzmarkierung angeordnet ist. Besonders bevorzugt werden zwei oder mehrere Referenzmarkierungen auf dem Projektionselement oder zumindest ortsfest relativ zu dem Projektionselement angeordnet oder ausgebildet. Die Referenzmarkierungen sind so ausgebildet, dass diese mindestens eine Position grafisch kennzeichnen, an der die erfassbare Projektion bei der Einstrahlung der gerichteten Strahlung entlang der optischen Achse ein wahrnehmbares Merkmal erzeugt.

Um zu verifizieren, dass die optischen Markierungen nicht selbst verfälscht sind und beispielsweise an eine Projektion eines gefälschten optisch aktiven Elements angepasst sind, kann eine Schablone vor oder während der Verifikation auf das Sicherheitselement aufgelegt werden, um die Positionen der Referenzmarkierungen mit Kontrollmarkierungen auf der Schablone zu vergleichen. Desweiteren können die Referenzmarkierungen Teil des Gesamtdesigns sein, so dass eine Verfälschung ihrer Position offensichtlich würde, z.B. durch verschobenen Text oder ein unstimmiges Dokumenten-Sicherheitsdesign.

Herstellungstechnisch ist es von Vorteil, das Projektionselement mittels eines transluzenten Aufdrucks auf das Abstandselement auszubilden. Hierbei kann eine Druckfarbe verwendet werden, die eine transluzente Druckschicht ausbildet. Alternativ kann drucktechnisch jedoch auch eine Chemikalie aufgebracht werden, die eine Oberfläche des Abstandselements bzw. eines Materials, aus dem das Abstandselement gebildet wird, so verändert, dass die Oberfläche transluzent wird.

Ebenso ist es alternativ möglich, das Projektionselement mittels einer transluzenten Folie oder Schicht auszubilden und in diese eine Durchgangsöffnung einzubringen, durch die die gerichtete Strahlung entlang der optischen Achse durch die transluzente Folie oder Schicht eingestrahlt werden kann.

Ebenfalls vorteilhaft ist es, das Kompensationselement ebenfalls drucktechnisch auf das Abstandselement oder eine andere Schicht oder Folie aufzudrucken, insbesondere wenn das Sicherheitselement und/oder ein Sicherheitsdokument, in welches das Sicherheitselement integriert wird, aus Folien oder Schichten hergestellt wird. Auch das Absorptionselement kann drucktechnisch auf eine andere Schicht oder Folie unterhalb des optisch aktiven Elements aufgebracht sein.

Um einen Abstand der Projektion von der optischen Achse zu vergrößern, entlang derer die gerichtete Strahlung eingestrahlt wird, ist bei einer Ausführungsform vorgesehen, dass das Abstandselement als optischer Lichtleiter ausgebildet ist, so dass die an dem optisch aktiven Element reflektierend gebeugte oder reflektierte Strahlung in dem Abstandselement über Totalreflexion geleitet wird, bevor diese auf dem Projektionselement die erfassbare Projektion erzeugt. Im Gegensatz zu anderen Ausführungsformen, bei denen die gebeugte oder reflektierte Strahlung unmittelbar nach dem Eintreten in das Abstandselement an der einen Seite auf der weiteren Seite, auf der das Projektionselement angeordnet ist, wieder austritt und die Projektion erzeugt, wird bei dieser Ausführungsform die reflektierte oder gebeugte Strahlung, die an der einen Seite in das Abstandselement eintritt, mindestens einmal an der weiteren Seite über Totalreflexion in das Abstandselement zurückgebeugt und an einem Austreten aus dem Abstandselement gehindert. Das Abstandselement kann somit vorteilhafterweise aus einer Folie gebildet sein, die einen höheren Brechungsindex als die angrenzenden Folien aufweisen, aus denen das Sicherheitselement bzw. ein Sicherheitsdokument gebildet sind. Das Projektionselement selbst ist dann so ausgebildet, dass dieses eine Totalreflexion an der Grenzfläche Abstandselement/Projektionselement verhindert und somit die in dem Abstandselement über Totalreflexion geleitete gebeugte oder reflektierte Strahlung im Bereich des Projektionselements aus dem Abstandselement austritt und eine Projektion auf dem Projektionselement erzeugt.

Bei einer besonders bevorzugten Ausführungsform ist das optisch aktive Element so ausgebildet, dass die reflektierend gebeugte und/oder reflektierte Strahlung mehrere unter verschiedenen Raumwinkeln von dem optisch aktiven Element ausgehende gerichtete und senkrecht zur Ausbreitungsrichtung flächig begrenzte Strahlen umfasst. Hierdurch wird eine Projektion erzeugt, die mehrere voneinander getrennte Projektionsmerkmale umfasst, welche durch die Durchstoßpunkte bzw. Auftreffpunkte der gebeugten und/oder reflektierten Strahlung auf dem Projektionselement gebildet sind. Diese können besonders günstig über Referenzmarkierungen markiert sein, so dass wie oben erwähnt eine zuverlässige Verifizierung durch menschliches Kontrollpersonal möglich ist, sofern dieses eine geeignete Strahlungsquelle sowie gegebenenfalls zusätzlich eine entsprechende Schablone zum Vergleichen der Referenzmarkierungen des Sicherheitsdokuments oder Sicherheitselements mit den Kontrollmarkierungen der Schablonen besitzt.

Weitere Vorteile und Merkmale der Erfindung ergeben sich aus der nachfolgenden Figurenbeschreibung.

Im Folgenden wird die Erfindung anhand von Ausführungsbeispielen unter Bezugnahme auf eine Zeichnung näher erläutert. Hierbei zeigen:
- Fig. 1: eine schematische Darstellung einer Ausführungsform eines Sicherheitselements;
- Fig. 2: eine schematische Draufsicht auf ein Sicherheitselement;
- Fig. 3: eine weitere schematische Ansicht einer weiteren Ausführungsform eines Sicherheitselements;
- Fig. 4: noch eine weitere Ausführungsform eines Sicherheitselements; und
- Fig. 5a, 5b: weitere schematische Draufsichten auf Ausführungsformen von Sicherheitselementen.

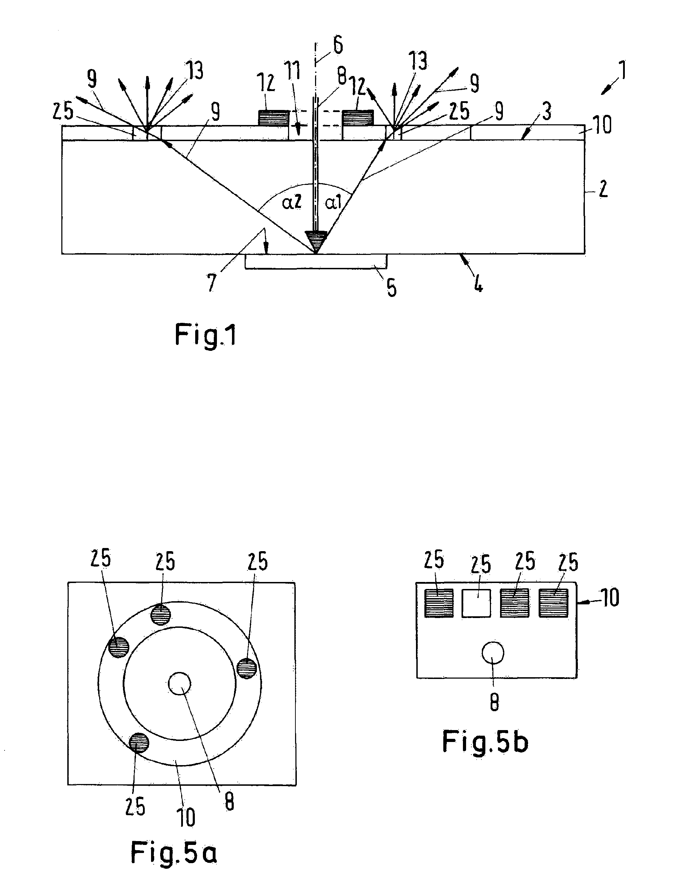

Fig. 1 zeigt eine schematische Schnittansicht eines Sicherheitselements 1. Dieses umfasst ein Abstandselement 2. Dieses ist transparent ausgestaltet für eine Wellenlänge einer Strahlung, welche zur Verifikation des Sicherheitselements verwendet werden soll. Bei der Strahlung kann es sich sowohl um sichtbares Licht als auch Strahlung im infraroten oder ultravioletten Wellenlängenbereich handeln. Das Abstandselement 2 weist eine vorzugsweise eben ausgeführte Seite 3, welche im Folgenden als Oberseite bezeichnet wird, auf. Gegenüberliegend zu der einen Seite ist eine gegenüberliegende weitere Seite 4 ausgebildet, welche im Folgenden als Unterseite bezeichnet wird. Die eine Seite 3 und die weitere Seite 4 weisen in der dargestellten Ausführungsform planparallele Flächen auf. Angrenzend an die weitere Seite 4 ist ein aktives optisches Element 5 angeordnet oder ausgebildet. Das optisch aktive Element 5 weist eine ausgezeichnete optische Achse 6 auf. Diese ist bezüglich des optisch aktiven Elements 5 so definiert, dass entlang dieser optischen Achse auf das optisch aktive Element 5 auftreffende Strahlung von diesem reflektiert oder reflektierend gebeugt wird. Bei der dargestellten Ausführungsform ist das optisch aktive Element 5 flächig ausgebildet und weist eine Oberfläche 7 auf, die der weiteren Seite 4 des Abstandselements 2 zugewandt ist. Die optische Achse 6 ist im dargestellten Ausführungsbeispiel eine Oberflächennormale zu der Oberfläche 7. Dies bedeutet, dass senkrecht auf das optisch aktive Element 5 auftreffende gerichtete Strahlung 8 an dem optisch aktiven Element 5 reflektierend gebeugt wird oder reflektiert wird. Dies bedeutet, dass gebeugte/reflektierte Strahlung 9 in dieselbe Hemisphäre und denselben 2π-Raumwinkel bezüglich der Oberfläche 7 des optisch aktiven Element 5 reflektierend gebeugt bzw. reflektiert wird, aus dem auch die gerichtete Strahlung 8 auf das optisch aktive Element 5 auftrifft. Es versteht sich für den Fachmann, dass die reflektierend gebeugte Strahlung 9 bzw. die reflektierte Strahlung 9 nicht zwangsläufig in der Zeichnungsebene/Schnittebene liegen muss, sondern vielmehr in dem gesamten 2π-Raumwinkel oberhalb der Oberfläche 7 des optisch aktiven Elements 5 gebeugt bzw. reflektiert werden kann.

Um die reflektierend gebeugte/reflektierte Strahlung 9 für eine Verifikation erfassbar zu machen, insbesondere für einen menschlichen Betrachter, ist es notwendig, diese gebeugte/reflektierte Strahlung 9 beim Austritt aus dem Sicherheitselement 1 "aufzufächern". Hierfür ist auf der einen Seite 3 des Abstandselements 2 ein Projektionselement 10 angeordnet oder ausgebildet. Bei der in Fig. 1 dargestellten Ausführungsform ist das Projektionselement 10 als transluzente Schicht bzw. Folie ausgebildet, die die auftreffende gebeugte/reflektierte Strahlung 9 beim Durchtritt diffus streut. Hierdurch entsteht auf dem Projektionselement 10 eine Projektion beispielsweise in Form eines Musters. Dieses Muster bzw. die Projektion wird dann mit einer vorgegebenen Projektion verglichen, um das Sicherheitselement zu verifizieren. Das Muster kann zum einen mit dem menschlichen Auge oder auch einer Kamera erfasst werden. Die aufgenommene grafische Abbildung, die mit einer Kamera erfasst ist, kann mit einer aus dem Stand der Technik bekannten Bildverarbeitungsvorrichtung, welche einen Mustervergleich ausführen kann, verifiziert werden.

Um einen Durchtritt der gerichteten Strahlung 8 durch das als transluzente Folie ausgebildete Projektionselement 10 zu ermöglichen, weist das Projektionselement 10 eine Aussparung 11, die als Durchgangsöffnung durch das Projektionselement 10 ausgebildet ist, um die optische Achse 6 herum auf. Um des Weiteren eine für die Wahrnehmung der Projektion störende Streuung der gerichteten Strahlung beim Eintritt in das Sicherheitselement 1 zu minimieren, ist ein Kompensationselement 12 vorgesehen, welches um die als Aussparung 11 ausgebildete Durchgangsöffnung herum angeordnet ist. Das Kompensationselement 12 ist so ausgebildet, dass es die gerichtete Strahlung 8 absorbiert. Das Kompensationselement kann beispielsweise durch einen Aufdruck einer absorbierenden Druckfarbe erfolgen.

Eine Verifikation der Projektion bzw. des durch die definiert reflektierend gebeugte bzw. definiert reflektierte Strahlung 9 erzeugte Muster lässt sich einfacher verifizieren, wenn mindestens eine, vorzugsweise mehrere Referenzmarkierungen 13 an oder auf dem Projektionselement angeordnet sind. Die Referenzmarkierungen 13 kennzeichnen Positionen grafisch, an denen die erfassbare Projektion bei Einstrahlung der gerichteten Strahlung 8 entlang der optischen Achse 6 erzeugt wird. Wird die gerichtete Strahlung 8 beispielsweise wie in dem dargestellten Beispiel in zwei unterschiedlichen Winkeln α1, α2 bezüglich der optischen Achse 6 reflektierend gebeugte Strahlen 9 "aufgeteilt", so ergibt sich ein Muster, d.h. eine Projektion, die zwei Projektionspunkte 25 umfasst.

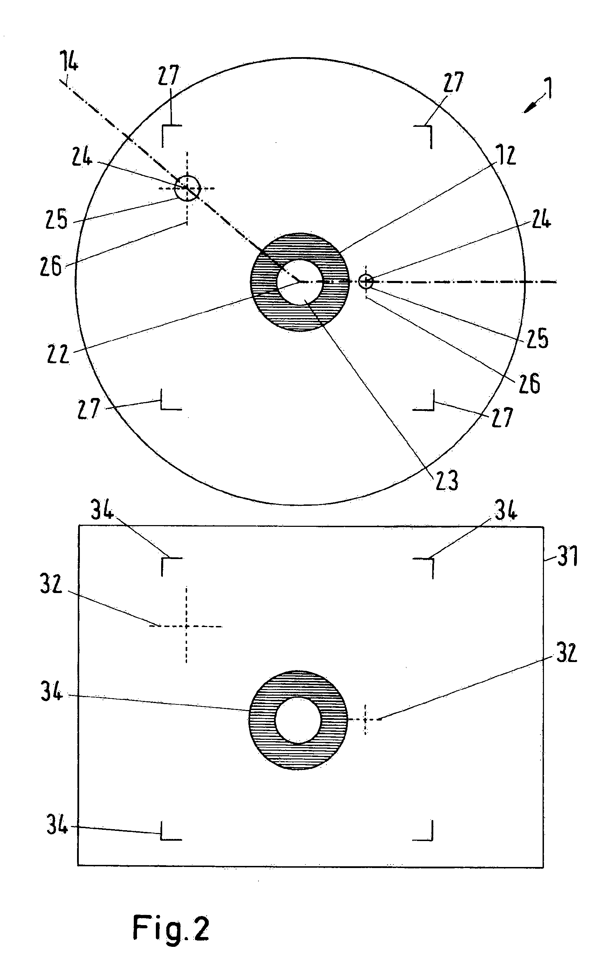

Dies ist beispielhaft in Fig. 2 dargestellt. Dort ist oben schematisch eine Draufsicht auf das Sicherheitselement 1 nach Fig. 1 dargestellt. In Fig. 2 ist eine Schnittlinie 14 gezeigt, entlang derer die Schnittansicht der Fig. 1 aufgenommen ist.

In einer Mitte 22 des Sicherheitselements 1 trifft gerichtete Strahlung 8 senkrecht zur Zeichnungsebene auf das Sicherheitselement 1. Um einen Eintrittsbereich 23, der beispielsweise durch die Aussparung 11 in dem als transluzente Folie ausgebildeten Projektionselement 10 ausgebildet ist (vergleiche Fig. 1), ist ein Kompensationselement 12 ausgebildet, welches eine beim Eintritt entstehende Streustrahlung absorbiert.

Die gerichtete Strahlung dringt in das Sicherheitselement ein und wird an einem optisch aktiven Element (welches nicht dargestellt ist und unter der Zeichnungsebene angeordnet ist) reflektierend gebeugt. Hierbei wird die gerichtete Strahlung in zwei Strahlen unter unterschiedlichen Raumwinkeln bezüglich der optischen Achse, welche senkrecht zur Zeichnungsebene durch die Mitte 22 verläuft, definiert. An Durchtrittspunkten 24 der reflektierend gebeugten Strahlung 9 durch das Projektionselement 10 entstehen Projektionspunkte 25. Gemeinsam bilden die Projektionspunkte 25 eine Projektion bzw. ein Muster.

Um eine Verifikation dieses Musters zu erleichtern, sind an Orten, an denen ein Auftreten von Projektionspunkten zu erwarten ist, Referenzmarkierungen 26 in Form von Fadenkreuzen ausgebildet. Um zu verhindern, dass die Referenzmarkierungen angepasst an ein verfälschtes aktives optisches Element aufgebracht sind, welches ein von dem Original abweichendes Beugungsmusters erzeugt, ist bei einer bevorzugten Ausführungsform zur Verifikation eine Verifikationsfolie 31 vorgesehen, wie sie unten in Fig. 2 exemplarisch schematisch gezeigt ist. Diese ist vorzugsweise transparent ausgebildet und weist Kontrollmarkierungen 32 auf, die mit den Referenzmarkierungen 26 des Sicherheitselements korrespondieren. Um eine Anordnung der Verifikationsfolie 31 auf dem Sicherheitselement zu erleichtern, können auf dem Sicherheitselement und/oder der Verifikationsfolie 31 Anlegemarkierungen 27, 34 vorgesehen sein. Eine der Anlegemarkierungen 34 kann beispielsweise so ausgebildet sein, dass sie mit dem Kompensationselement 12 korrespondiert. Auch die Referenzmarkierungen 26 und die Kontrollmarkierungen 32 können als Anlegemarkierungen verwendet werden und/oder ausgebildet sein. Durch Auflegen der Verifikationsfolie 31 auf das Sicherheitselement 1 kann eine korrekte Anordnung der Referenzmarkierungen 26 auf dem Sicherheitselement 1 überprüft werden. Kontrollmarkierungen 32 auf der Verifikationsfolie 31 korrespondieren mit den Referenzmarkierungen 26. Es wird an dieser Stelle angemerkt, dass die Verifikation der korrekten Anordnung der Referenzmarkierungen 26 eine zweite Verifikationsebene zur Prüfung des Sicherheitselements 1 darstellt. Eine einfache Verifikation ist bereits dadurch möglich, dass die gerichtete Strahlung entlang der optischen Achse auf das Sicherheitselement gerichtet wird und ein Vorhandensein und eine korrekte Ausgestaltung des entstehenden Musters, d.h. der entstehenden Projektion, geprüft sind. Nur falls Zweifel hinsichtlich der korrekten Projektion bzw. des korrekten Musters bestehen, ist eine zusätzliche Verifikation über eine solche Verifikationsfolie nötig. Eine solche Folie kann selbstverständlich auch bei Ausführungsformen angewendet werden, die keine Referenzmarkierungen aufweisen. In einem solchen Fall wird die entstehende Projektion direkt mit den Kontrollmarkierungen 34 verglichen.

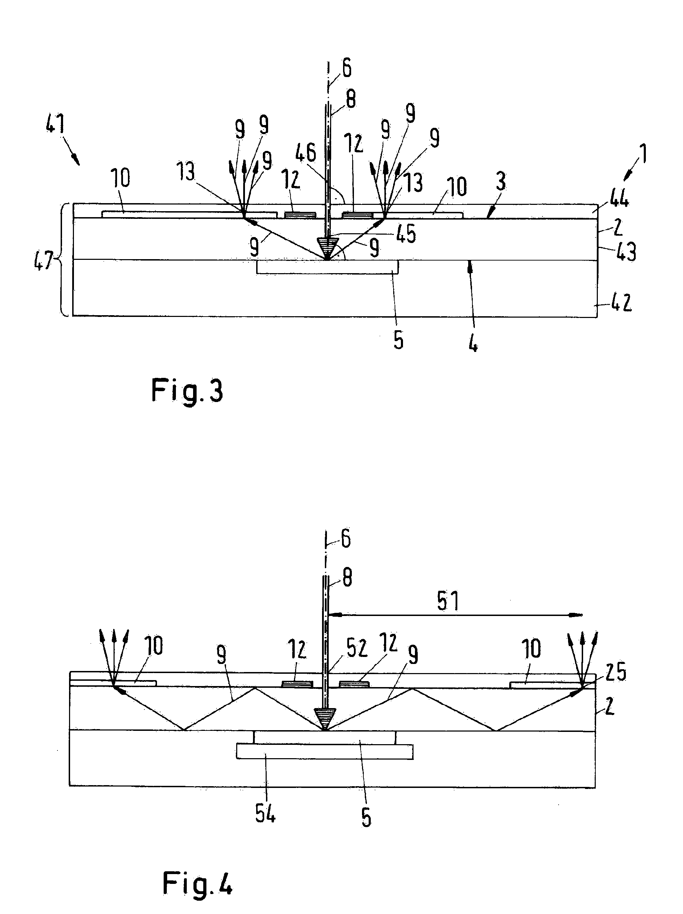

In Fig. 3 ist eine weitere Ausführungsform eines Sicherheitselements 1 schematisch in einer Schnittzeichnung dargestellt. Das Sicherheitselement 1 ist beispielsweise als Sicherheitsdokument 41 ausgebildet. Dieses ist aus mehreren Folien, beispielsweise in einem Laminationsvorgang, zu einem Dokumentenkörper zusammengefügt. Bei der vereinfachten dargestellten Ausführungsform nach Fig. 3 umfasst das Sicherheitsdokument 41, welches das Sicherheitselement 1 darstellt bzw. umfasst, eine Trägerfolie 42, das als transparente Folie 43 ausgebildete Abstandselemente sowie eine Deck- und Schutzfolie 44. Diese ist ebenfalls transparent ausgebildet. Zwischen der Trägerfolie 42 und der transparenten Folie 43 des Abstandselements 2 ist das optisch aktive Element 5 angeordnet. Dieses ist erneut so angeordnet, dass die bezüglich des optisch aktiven Elements 5 definierte optische Achse 6 mit einer Normalen 45 des optisch aktiven Elements 5 sowie einer Normalen 46 des Sicherheitsdokuments 41 zusammenfällt. Sowie das Kompensationselement 12 als auch das Projektionselement 10 sind in dieser Ausführungsform drucktechnisch auf die transparente Folie 42 bzw. die Deckfolie 44 aufgebracht. In gleicher Weise sind die Referenzmarkierungen 13 sowie Anlegemarkierungen 14 drucktechnisch aufgebracht. Die einzelnen Folien sind vorzugsweise miteinander in einem Hochtemperaturlaminationsverfahren zu einem Dokumentkörper 47 zusammengefügt. Die einzelnen Folien können aus unterschiedlichen Kunststoffmaterialien, welche vorzugsweise thermoplastisch ausgebildet sind, hergestellt sein. Besonders bevorzugt werden Polycarbonatfolien.

Es versteht sich für den Fachmann, dass das Sicherheitsdokument 41 eine Vielzahl weiterer Sicherheitsmerkmale und/oder Sicherheitselemente umfassen kann.

In Fig. 4 ist noch eine weitere Ausführungsform eines Sicherheitselements 1 schematisch gezeigt, das ähnlich zu dem nach Fig. 3 ausgebildet ist. Diese Ausführungsform unterscheidet sich von der nach Fig. 3 hauptsächlich dadurch, dass die transparente Folie 43, welche das Abstandselement 2 bildet, einen größeren Brechungsindex als die Trägerfolie 41 und die Schutz- und Abdeckfolie 44 aufweist. Ferner ist das optisch aktive Element 5 bei dieser Ausführungsform so ausgebildet, dass die definiert reflektierend gebeugte Strahlung 9 bzw. reflektierte Strahlung 9 unter solchen Winkeln bezüglich der optischen Achse 6 gebeugt/reflektiert wird, dass diese auf die durch die eine Seite 3 (Oberseite) unter einem Winkel auftreffen, unter dem eine Totalreflexion der gebeugten Strahlung 9 stattfindet. Ebenso erfolgt dann anschließend an der weiteren Seite 4 (Unterseite) ebenso eine Totalreflexion, so dass die reflektierte/gebeugte Strahlung 9 in dem Abstandselement 2 wie in einem Lichtleiter geleitet wird. Die Lichtleitung wird im Bereich des aufgedruckten Projektionselements 10 unterbunden. Der Aufdruck wird somit so ausgeführt, dass die Bedingungen für eine Totalreflexion an dem Übergang von dem Abstandselement 2 zu dem Projektionselement 10 nicht gegeben sind. Somit kann die gebeugte/reflektierte Strahlung 9 aus dem Abstandselement 2 austreten und eine Projektion in dem Projektionselement 10 verursachen. Hierdurch ist es möglich, einen Abstand 51 zwischen der Position 52, an der die gerichtete Strahlung 8 auf das Sicherheitselement trifft, und dem Projektionspunkt 25 über die Totalreflexion und Strahlungsleitung in dem Abstandselement 2 zu vergrößern.

Um eine diffuse Streuung von Anteilen der gerichteten Strahlung 8, die durch das optisch aktive Element 5 transmittiert werden, zu verhindern, ist bei der hier dargestellten Ausführungsform auf einer von dem Abstandselement 2 abgewandten Seite des optisch aktiven Elements 5 ein Absorptionselement 54 angeordnet ist. Es versteht sich für den Fachmann, dass ein solches Absorptionselement auch in die Ausführungsformen der Fig. 1 bis 3 integriert werden kann.

In Fig. 5a und 5b sind weitere mögliche Muster für Sicherheitselemente schematisch gezeigt. Dargestellt sind jeweils die auftreffende gerichtete Strahlung 8 sowie die Projektionspunkte 25 der reflektierend gebeugten Strahlung auf dem Projektionselement 10. Eine Vielzahl weiterer Muster ist möglich. In Fig. 5b ist eine Intensität der Projektionspunkte 25 unterschiedliche. Einer der vier Projektionspunkte 25 weist eine höhere Intensität als die übrigen drei Projektionspunkte 25 auf.

Das optisch aktive Element kann unterschiedlich ausgebildet sein und beispielsweise eine definiert ausgebildete reflektierende Oberflächenstruktur aufweisen. Besonders bevorzugt werden jedoch optisch aktive Elemente, die als Volumenhologramm ausgebildet sind. Neben Mustern, die aus einzelnen Projektionspunkten gebildet sind, welche durch definiert gebeugte Strahlen erzeugt werden, können auch komplexere Muster, die beispielsweise ein Information speicherndes Projektionshologramm darstellen, verwendet werden. Neben Volumenhologrammen lassen sich selbstverständlich auch diffraktive Prägestrukturen, metallisiert und auch nicht-metallisiert, verwenden.

Bei den dargestellten Ausführungsformen ist das optisch aktive Element jeweils getrennt von dem Abstandselement ausgebildet. Es sind jedoch auch Ausführungsformen denkbar, bei denen beispielsweise das optisch aktive Element in das Abstandselement integriert ausgebildet wird, beispielsweise indem das optisch aktive Element in das Abstandselemente als Hologramm hineinbelichtet wird.

Es versteht sich für den Fachmann, dass lediglich beispielhafte Ausführungsformen in der detaillierten Figurenbeschreibung dargestellt sind.

### Bezugszeichenliste

- 1: Sicherheitselement
- 2: Abstandselement
- 3: eine Seite (Oberseite)
- 4: weitere Seite (Unterseite)
- 5: optisch aktives Element
- 6: optische Achse
- 7: Oberfläche
- 8: gerichtete Strahlung
- 9: definiert gebeugte/definiert reflektierte Strahlung
- 10: Projektionselement
- 11: Aussparung
- 12: Kompensationselement
- 13: Referenzmarkierung
- 14: Schnittlinie
- 22: Mitte
- 23: Eintrittsbereich
- 24: Durchtrittspunkt
- 25: Projektionspunkt
- 26: Referenzmarkierungen
- 27: Anlegemarkierung
- 31: Verifikationsfolie
- 32: Kontrollmarkierung
- 34: Anlegemarkierung
- 41: Sicherheitsdokument
- 42: Trägerfolie
- 43: transparente Folie
- 44: Schutz- und Deckfolie
- 45: Normale des optisch aktiven Elements
- 46: Normale des Sicherheitsdokuments
- 47: Dokumentenkörper
- 51: Abstand
- 52: Position
- 54: Absorptionselement

## Patentansprüche

1. Sicherheitselement (1) für ein Wert- oder Sicherheitsdokument (41) umfassend ein optisch aktives Element (5), bezüglich dessen eine optische Achse (6) definiert ist, und welches ausgebildet ist, gerichtete Strahlung (8), die entlang der optischen Achse (6) auf das optisch aktive Element (5) auftrifft, definiert und abweichend von der geometrischen Optik unter einem oder mehreren Winkeln (α1-αn) gegenüber der optischen Achse (6) zu reflektieren oder reflektierend zu beugen,
ein Projektionselement (10) und
ein Abstandselement (2), das für die Strahlung (8, 9) transparent ist,
wobei das Projektionselement (10) und das optisch aktive Element (5) auf gegenüberliegenden Seiten (3, 4) des Abstandselements (2) so angeordnet oder ausgebildet sind und über das Abstandselement (2) miteinander strahlungsleitend verbunden sind, dass die bei Einstrahlung der gerichteten Strahlung (8) entlang der optischen Achse (6) durch das Abstandselement (2) hindurch definiert reflektierte und/oder reflektierend gebeugte Strahlung (9) eine erfassbare Projektion auf dem Projektionselement (10) erzeugt,
**dadurch gekennzeichnet, dass**
beabstandet zu dem optisch aktiven Element (5) ein Kompensationselement (12), welches für die Wellenlänge der gerichteten Strahlung (8) zumindest an einer von dem optisch aktiven Element (5) abgewandten Eintrittsseite die gerichtete Strahlung (8) absorbierend ist, angeordnet oder ausgebildet ist, wobei das Kompensationselement (12) die optische Achse (6) in einer Ebene quer zur optischen Achse (6) umschließt und auf der optischen Achse (6) eine Durchtrittsöffnung für die gerichtete Strahlung (8) aufweist.

2. Sicherheitselement (1) nach Anspruch 1, **dadurch gekennzeichnet, dass** das Abstandselement (2) aus einer oder mehreren für eine Wellenlänge der gerichteten Strahlung (8) transparenten Schichten (43) gebildet ist.

3. Sicherheitselement (1) nach einem der Anspruche 1 oder 2, **dadurch gekennzeichnet, dass** das optisch aktive Element (5) ein Volumenhologramm ist.

4. Sicherheitselement (1) nach einem der Ansprüche 1 bis 3, **dadurch gekennzeichnet, dass** auf dem Projektionselement (10) mindestens eine Referenzmarkierung (13) angeordnet ist.

5. Sicherheitselement (1) nach einem der Ansprüche 1 bis 4, **dadurch gekennzeichnet, dass** das Projektionselement (10) mittels eines transluzenten Aufdrucks auf das Abstandselement (2) ausgebildet ist.

6. Sicherheitselement (1) nach einem der Ansprüche 1 bis 5, **dadurch gekennzeichnet, dass** das Abstandselement (2) als optischer Lichtleiter ausgebildet ist, so dass die an dem optisch aktiven Element (5) reflektierend gebeugte oder reflektierte Strahlung (9), in dem Abstandselement (2) über Totalreflexion geleitet wird, bevor diese auf dem Projektionselement (10) die erfassbare Projektion erzeugt.

7. Sicherheitselement (1) nach einem der Ansprüche 1 bis 6, **dadurch gekennzeichnet, dass** die reflektierend gebeugte oder reflektierte Strahlung (9) mehrere unter verschiednen Raumwinkeln von dem optisch aktiven Element ausgehende gerichtete und senkrecht zur Ausbreitungsrichtung flächig begrenzte Strahlen umfasst.

8. Sicherheitselement nach einem der Ansprüche 1 bis 7, **dadurch gekennzeichnet, dass** ein Absorptionselement (54) auf einer von dem Abstandselement (2) abgewandten Seite des optisch aktiven Elements (5) angrenzend oder beabstandet von dieser abgewandten Seite angeordnet ist, um durch das optisch aktive Element (5) transmittierte Strahlung zu absorbieren.

9. Sicherheitsdokument (41), welches ein Sicherheitselement (1) nach einem der Ansprüche 1 bis 8 umfasst.

10. Verfahren zum Erzeugen eines Sicherheitselements umfassend die Schritte:
Bereitstellen oder Ausbilden eines optisch aktiven Elements (5), bezüglich dessen eine ausgezeichnete optische Achse (6) definiert ist, wobei das optisch aktive Element (5) entlang der optischen Achse (6) auf das optisch aktive Element (5) auftreffende gerichtete Strahlung (8), definiert in eine oder mehreren Richtungen reflektierend beugt oder reflektiert;
Bereitstellen oder Ausbilden eines Abstandselements (2), welches für die gerichtete Strahlung (8) transparent ist, wobei das Abstandselement (2) angeordnet oder
ausgebildet wird, dass eine Seite (4) des Abstandselements (2) an das optisch aktive Element (5) angrenzt und in dem fertiggestellten Sicherheitselement (1) die gerichtete Strahlung (8) entlang der optischen Achse (6) durch das Abstandselement (2) auf das optisch aktive Element (5) auftreffen kann,
**dadurch gekennzeichnet, dass**
ein Projektionselement (10) ausgebildet oder angeordnet wird, so dass das Projektionselement (10) auf einer der einen Seite (4) gegenüberliegenden weiteren Seite (3) des Abstandselements (2) angeordnet wird oder ist und mittels des Abstandselements (2) strahlungsleitend mit dem optisch aktiven Element (5) verbunden wird oder ist, so dass die bei Einstrahlung der gerichteten Strahlung (8) entlang der optischen Achse (6) definiert reflektierte und/oder reflektierend gebeugte Strahlung (9) eine erfassbare Projektion auf dem Projektionselement (10) erzeugt,
und beabstandet zu dem optisch aktiven Element (5) ein Kompensationselement (12), welches für die Wellenlänge der gerichteten Strahlung (8) zumindest an einer von dem optisch aktiven Element (5) abgewandten Eintrittsseite die gerichtete Strahlung (8) absorbierend ist, angeordnet oder ausgebildet wird, wobei das Kompensationselement (12) die optische Achse (6) in einer Ebene quer zur optischen Achse (6) umschließt und auf der optischen Achse (6) eine Durchtrittsöffnung für die gerichtete Strahlung (8) aufweist.

## Claims

1. Security element (1) for a value or security document (41), comprising an optically active element (5) with respect to which an optical axis (6) is defined, and which is designed for reflecting or reflectively refracting, in a defined manner with respect to the optical axis (6) and deviating from the geometric optics by one or more angles (α1-αn), directed radiation (8) impinging on the optically active element (5) along the optical axis (6), a projection element (10), and
a spacer element (2) which is transparent to the radiation (8, 9),
wherein the projection element (10) and the optically active element (5) are arranged or formed on opposite sides (3, 4) of the spacer element (2) and are optically conductively connected to each other by means of the spacer element (2) so that the radiation (9) reflected and/or reflectively refracted through the spacer element (2) in a defined manner when the directed radiation (8) impinges along the optical axis (6) generates a perceivable projection on the projection element (10),
**characterised in that**
a compensation element (12) which is absorbent for the wavelength of the directed radiation (8) at least on an entry side remote from the optically active element (5) is arranged or formed at a distance from the optically active element (5), wherein the compensation element (12) surrounds the optical axis (6) in a plane transverse to the optical axis (6) and has on the optical axis (6) a through-opening for the directed radiation (8).

2. Security element (1) according to claim 1, **characterised in that** the spacer element (2) is formed from one or more layers (43) transparent to a wavelength of the directed radiation (8).

3. Security element (1) according to any one of claims 1 or 2, **characterised in that** the optically active element (5) is a volume hologram.

4. Security element (1) according to any one of claims 1 to 3, **characterised in that** at least one reference marking (13) is arranged on the projection element (10).

5. Security element (1) according to any one of claims 1 to 4, **characterised in that** the projection element (10) is formed by means of a translucent imprint on the spacer element (2).

6. Security element (1) according to any one of claims 1 to 5, **characterised in that** the spacer element (2) is designed as an optical light guide, so that the radiation (9) reflectively refracted or reflected at the optically active element (5) is guided in the spacer element (2) via total reflection before said radiation generates the perceivable projection on the projection element (10).

7. Security element (1) according to any one of claims 1 to 6, **characterised in that** the reflectively refracted or reflected radiation (9) comprises multiple directed beams coming out from the optically active element at different spatial angles, said beams being limited in surface area perpendicular to the direction of propagation.

8. Security element according to any one of claims 1 to 7, **characterised in that** an absorption element (54) is arranged on a side of the optically active element (5) remote from the spacer element (2), adjacent to or at a distance from said remote side, in order to absorb radiation transmitted through the optically active element (5).

9. Security document (41) which comprises a security element (1) according to any one of claims 1 to 8.

10. Method for producing a security element, comprising the steps:
providing or forming an optically active element (5), with respect to which a marked optical axis (6) is defined, wherein the optically active element (5) reflectively refracts or reflects, in a defined manner in one or more directions, directed radiation (8) impinging on the optically active element (5) along the optical axis (6);
providing or forming a spacer element (2) which is transparent to the directed radiation (8),
wherein the spacer element (2) is arranged or formed such that one side (4) of the spacer element (2) adjoins the optically active element (5) and in the finished security element (1) the directed radiation (8) can impinge on the optically active element (5) along the optical axis (6) through the spacer element (2),
**characterised in that**
a projection element (10) is formed or arranged such that the projection element (10) is arranged on another side (3) of the spacer element (2) opposite said one side (4) and is optically conductively connected to the optically active element (5) by means of the spacer element (2) so that the radiation (9) reflected and/or reflectively refracted in a defined manner when the directed radiation (8) impinges along the optical axis (6) generates a perceivable projection on the projection element (10), and a compensation element (12) which is absorbent for the wavelength of the directed radiation (8) at least on an entry side remote from the optically active element (5) is arranged or formed at a distance from the optically active element (5), wherein the compensation element (12) surrounds the optical axis (6) in a plane transverse to the optical axis (6) and has on the optical axis (6) a through-opening for the directed radiation (8).

## Revendications

1. Elément de sécurité (1) pour un document de valeur ou de sécurité (41) comportant :
un élément optiquement actif (5), par rapport auquel un axe optique (6) est défini et qui est conçu pour réfléchir ou diffracter par réflexion un rayonnement orienté (8) qui est incident le long de l'axe optique (6) sur l'élément optiquement actif (5), de manière définie et déviante de l'optique géométrique d'un ou de plusieurs angles (α1-αn) par rapport à l'axe optique (6),
un élément de projection (10) et
un élément d'écartement (2) qui est transparent au rayonnement (8, 9),
l'élément de projection (10) et l'élément optiquement actif (5) étant disposés ou conçus sur des côtés opposés (3, 4) de l'élément d'écartement (2) et étant reliés entre eux par l'élément d'écartement (2) d'une manière dirigeant le rayonnement de sorte que le rayonnement réfléchi et/ou diffracté par réflexion (9) de manière définie par l'élément d'écartement (2) lors de l'émission du rayonnement dirigé (8) le long de l'axe optique (6) produise une projection détectable sur l'élément de projection (10),
**caractérisé en ce**
**qu'**un élément de compensation (12) qui absorbe le rayonnement dirigé (8) pour la longueur d'ondes du rayonnement dirigé (8) au moins sur un côté d'entrée à l'opposé de l'élément optiquement actif (5) est disposé ou conçu écarté de l'élément optiquement actif (5),
l'élément de compensation (12) entourant l'axe optique (6) dans un plan transversal à l'axe optique (6) et présentant sur l'axe optique (6) un orifice de passage pour le rayonnement dirigé (8).

2. Elément de sécurité (1) selon la revendication 1, **caractérisé en ce que** l'élément d'écartement (2) est formé d'une ou de plusieurs couches transparentes (43) à une longueur d'ondes du rayonnement dirigé (8).

3. Elément de sécurité (1) selon la revendication 1 ou 2, **caractérisé en ce que** l'élément optiquement actif (5) est un hologramme de volume.

4. Elément de sécurité (1) selon la revendication 1 à 3, **caractérisé en ce qu'**au moins un marquage de référence (13) est disposé sur l'élément de projection (10).

5. Elément de sécurité (1) selon l'une quelconque des revendications 1 à 4, **caractérisé en ce que** l'élément de projection (10) est conçu au moyen d'une impression translucide sur l'élément d'écartement (2).

6. Elément de sécurité (1) selon l'une quelconque des revendications 1 à 5, **caractérisé en ce que** l'élément d'écartement (2) est conçu en tant que guide d'ondes optiques de sorte que le rayonnement réfléchi et/ou diffracté par réflexion (9) sur l'élément optiquement actif (5) soit dirigé par le biais d'une une réflexion totale dans l'élément d'écartement (2) avant que celui-ci produise la projection détectable sur l'élément de projection (10).

7. Elément de sécurité (1) selon l'une quelconque des revendications 1 à 6, **caractérisé en ce que** le rayonnement réfléchi et/ou diffracté par réflexion (9) comprend plusieurs rayons dirigés selon différents angles solides partant de l'élément optiquement actif et limités en surface perpendiculairement à la direction de diffusion.

8. Elément de sécurité selon l'une quelconque des revendications 1 à 7, **caractérisé en ce qu'**un élément d'absorption (54) est disposé sur un côté de l'élément optiquement actif (5) opposé à l'élément d'écartement (2) tout en étant contigu à ce côté opposé ou écarté de ce dernier afin d'absorber le rayonnement transmis par l'élément optiquement actif (5).

9. Document de sécurité (41) qui comprend un élément de sécurité (1) selon l'une quelconque des revendications 1 à 8.

10. Procédé de production d'un élément de sécurité comportant les étapes suivantes :
fourniture ou formation d'un élément optiquement actif (5), par rapport auquel est défini un axe optique marqué (6), l'élément optiquement actif (5) réfléchissant ou diffractant par réflexion d'une manière définie dans une ou plusieurs directions un rayonnement dirigé (8) incident le long de l'axe optique (6) sur l'élément optiquement actif (5) ;
fourniture ou formation d'un élément d'écartement (2),
qui est transparent au rayonnement dirigé (8), l'élément d'écartement (2) étant disposé ou conçu de sorte qu'un côté (4) de l'élément d'écartement (2) soit contigu à l'élément optiquement actif (5) et que, dans l'élément de sécurité terminé (1), le rayonnement dirigé (8) puisse être incident sur l'élément optiquement actif (5) le long de l'axe optique (6) par le biais de l'élément d'écartement (2),
**caractérisé en ce**
**qu'**un élément de projection (10) est conçu ou disposé de sorte que l'élément de projection (10) est disposé sur un autre côté (3) de l'élément d'écartement (2) opposé au dit côté (4) et qu'il est relié au moyen de l'élément d'écartement (2), sous conduction du rayonnement, à l'élément optiquement actif (5) de sorte que le rayonnement (9) réfléchi et/ou diffracté par réflexion de manière définie le long de l'axe optique (6) lors du rayonnement du rayonnement dirigé (8) produise une projection détectable sur l'élément de projection (10) et
**qu'**un élément de compensation (12) qui absorbe le rayonnement dirigé (8) pour la longueur d'ondes du rayonnement dirigé (8) au moins sur un côté d'entrée à l'opposé de l'élément optiquement actif (5), est disposé ou conçu écarté de l'élément optiquement actif (5),
l'élément de compensation (12) entourant l'axe optique (6) dans un plan transversal à l'axe optique (6) et
présentant sur l'axe optique (6) un orifice de passage pour le rayonnement dirigé (8).
